# EUROPEAN PATENT SPECIFICATION

(11) **EP 3 985 170 B1**
(45) Date of publication and mention of the grant of the patent: **08.04.2026**
(21) Application number: 20202576.3
(22) Date of filing: 19.10.2020
(51) Int. Cl.: D21J 3/00

(54) **MOLD FOR MANUFACTURING OF A MOLDED FIBER PRODUCT**
FORM ZUR HERSTELLUNG EINES FASERFORMPRODUKTES
MOULE POUR LA FABRICATION D'UN PRODUIT FIBREUX MOULÉ

(43) Date of publication of application: 20.04.2022
(73) Proprietor: Valmet Technologies Oy, 02150 Espoo (FI)
(72) Inventor: TRÄFF, Henrik, 86232 KVISSLEBY (SE); SIIRA, Tomi, 40100 JYVÄSKYLÄ (FI)
(74) Representative: Kespat Oy

(56) References cited:
- EP-A1- 3 237 680
- WO-A1-2015/019061
- WO-A1-2018/237279

## Description

The present invention relates to a mold for manufacturing of a molded fiber product, which mold includes a porous product surface made by additive manufacturing, wherein at least a part of the product surface is in form of a layer without defined holes forming undefined mesh.

EP-patent number EP3237680 discloses a mold produced in an additive manufacturing process such as a 3D-printing process. Such an additive manufacturing process may comprise selective sintering of a powdery material having particles of an average size of 1 - 50 microns, preferably 5 - 30 microns. During the sintering process, the powdery material is completely melted through the addition of energy by means of a laser beam. In the additive manufacturing process the wall of the mold is equipped with several small through holes to achieve a dense perforation. Thus, the product surface of the mold is porous.

It is laborious to manufacture the mold with the traditional solid structures. In addition, partly the product surface is too perforated or the through holes are too big, but on the other hand, the through holes tend to clog. Too perforated product surface makes the final molded fiber product rough and thereby suitable only for lower quality products because of markings. And more, the known mold explained above is usually for pulp as fiber suspension or fiber slurry only where the mold is dipped in and fiber product sucked to the surface of the mold from a water suspension or injected through channels with excess of water.

WO2018237279A1 discloses perforated structures and methods for their manufacture. The perforated structures comprise zones of perforations, which are optimized for controlling the flow of gas or liquid through the perforated structure. The perforated structures may be configured for use as molds and for manufacture by additive manufacturing processes.

The object of the invention is to provide for manufacturing of a molded fiber product a new kind of mold, which is more versatile than before, but easier and quicker to manufacture. The characteristic features of the mold according to the invention are stated in the accompanying Claims. The properties of the mold can be easily varied and thereby achieving new porous structures and some combinations also. Besides, the mold is manufactured in less time thus saving the costs. In addition, the mold has good strength even when the shape of the mold can be complex.

The invention is described below in detail by referring to the enclosed drawings, which illustrate some of the embodiments of the invention, in which
- Figure 1a: shows a cross section of the pair of molds according to the invention for forming of a molded fiber product,
- Figure 1b: shows a partial enlargement of the mold of Figure 1a,
- Figure 2a: shows a top view of the mold according to the invention,
- Figure 2b: shows a top view of a set of molds according to the invention,
- Figure 3a: shows a cross section of the pair of molds according to the invention for hot pressing of a molded fiber product,
- Figure 3b: shows another pair of molds for hot pressing of a molded fiber product.

Molded fiber products, called also MFP are made from cellulose fibers. Such products are disposable cups or plates, for example. Cellulose fibers are first dispersed in water, then formed, drained, and dried. One specific way to manufacture molded fiber products is thermoforming. After forming, the product is pressed with high temperature and pressure, the combination of which drains and evaporates the water and moisture out of the product. Thus, no oven drying is needed and high quality, thin walled products are ready after manufacturing. The dimensional accuracy and rigidity are good, and the surface of the product is smooth.

The forming and especially the pressing need two molds for each product, i.e. one negative and one positive. At least one of these must have a perforated or other way porous product surface for drainage. The mold is also called a tool. The product surface is the outer surface of the mold which contacts the product during manufacturing and gives the final shape to the product. Also, the water, steam, and air flow through the porous product surface during the forming and pressing.

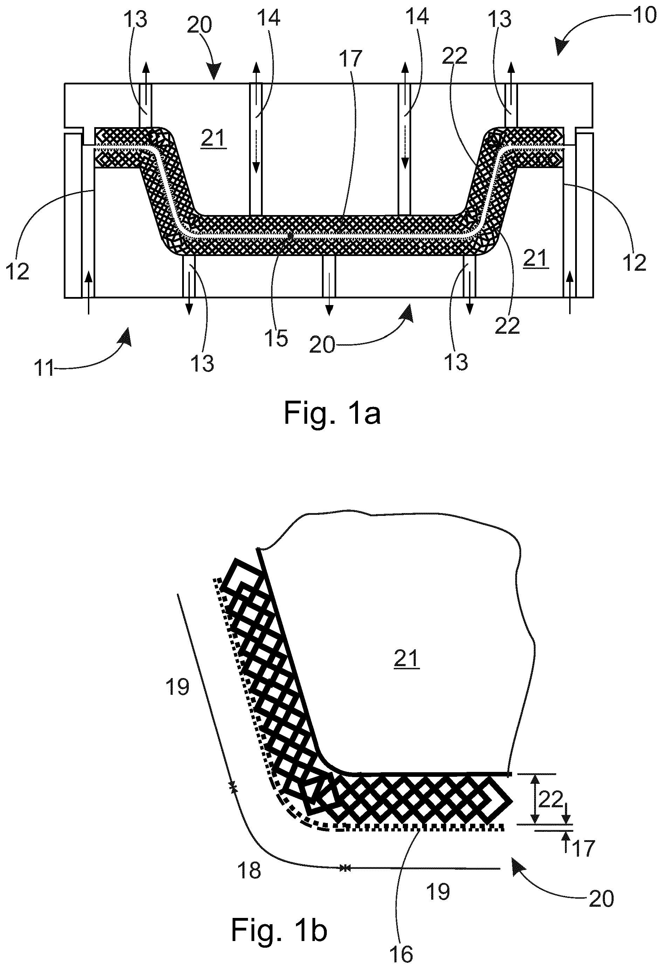

Fig. 1a shows a pair of molds according to the present invention. The mold is for manufacturing of a molded fiber product. The pair of molds in Fig. 1a is formed of an upper mold 10 and a lower mold 11. This pair is for forming of the molded fiber product. Thus, there are channels 12 for feeding fibers between the molds. Here, the channels 12 are in the lower mold 11, which preferably is stationary while the upper mold 10 is vertically movable. Thus, the channels are easy to arrange. During the forming, air and water drains out via exits 13 arranged into the molds 11 and 10. Here, some of the exits may act as specific connections which are combined blowing and vacuum connections. Here, the upper mold 10 includes two specific connections 14 and blowing is shown by arrows with dashed line. By blowing the just formed product is easily detached from the upper mold after forming. The specific connections are useful in both lower and upper molds. On other hand, the specific connections may also feed fibers into the cavity 15 defined the pair of molds and then during the forming water runs out via the same connections. This ensures the even filing of the cavity. Some feeding channels outside product surface are possible and it also enables the whole product surface to be made with porous structures. Also, the distance and number of the exits 13 may be used to control dewatering effectivity. For example, the vertical wall of the product may need more effective dewatering than horizontal bottom of the product. The side walls and upper corners are far from the exits at the bottom. So, there may be more exits.

As mentioned earlier, the mold 10 or 11 includes a porous product surface 16 made by additive manufacturing. According to the invention, at least a part of the product surface 16 is in form of a layer 17 without defined holes. Thus, the porosity of the layer is small enough to drain air and water out of the product during the forming and pressing, but to still hold the fibers on the product surface of the mold. In other words, the porous layer is capable of separating fibers from fluid. This is important when using foam where a mixture of fibers, water and air is led between two molds. In practice, foam is carrying the fibers for the forming. In foam forming technology aqueous foam instead of water is used as a carrier medium in the manufacturing process of fiber-based products.

Porousness according to the invention differs from the porousness in the closest prior art. According to the invention, the porous layer has no defined holes while the prior teaches that porous means channels or holes from one side to the other. Generally, according to the invention, perforations are used to describe very small channels made through a part of the mold, for example through just the surface. Then there are defined holes or channels for larger and longer inlet or exit channels which reach from the back of the mold to the lattice on the product area and through mold only in between the products.

In some applications, a combination of perforation and porous layer is advantageous. For example, the product properties can be adjusted more easily and more diversely than before by making the molds with varying product surfaces. For example, porous layer is the main part of the product surface and some defined perforations or channels may be used for specific needs like inlets or holding vacuum points.

It is possible to laser print holes, but they would be too big. In other words, the openness of the surface layer would be too large, and fibers would suck into the made holes. But the laser print holes may be useful in the side surfaces to be cut away, in inlet channels and maybe even in backside of the product. Surprisingly, the layer 17 is at least semi randomly made by additive manufacturing. The semi random structure has an uncontrolled geometry which lacks through holes. Thus, the layer is like a mesh having good porosity for air and water, but still good restraint for fibers. This ensures good forming and pressing properties with low energy and good end-product properties. The properties of the layer are dictated by various parameters in the printing process, such as laser power, laser speed, layer height, scan line distances and over all scanning strategy. Also, the use of an electron beam is possible.

Advantageously, the layer 17 consists of several parts 18 and 19 having different properties. In this way, the drainage can be settled as wanted. For example, in the corners of the mold, the porousness of the layer should be greater than elsewhere. Now it is possible to make the layer different. As shown in Fig. 1b, a part 18 of the outer surface 16 of the layer 17 is more porous in the corner than elsewhere. Thus, water is drained more and thereby that part of the product will be denser. This gives many opportunities to form the final product more accurately. By a denser part it is possible to bend the product easier or in some other product to strengthen the product itself.

With this invention, the molds are manufactured with less time and effort than before. Advantageously, the layer 17 has 0,5 - 5 mm of thickness. Thus, instead of the whole mold at least part of the product surface and advantageously also the backing structure is made by additive manufacturing. This shortens the manufacturing of the mold and cuts down the costs.

Also, the new manufacturing process gives new options. For example, the thickness of the layer 17 can be uneven in different parts of the mold. This is achieved easily by additive manufacturing. Here the layer is according to the invention 3D-printed of metal. Then, the properties of the molds and final product may be easily tuned as wanted.

In practice, the layer 17 has porosity of 20 - 40%. Then, the air and water will flow out while the fibers will settle on the product surface of the mold. The porosity level will be easy to adjust by 3D-printing. In other words, there can be different porosity levels in different parts of the mold. Also, the flow resistance of the layer will increase with layer thickness likely linearly. For example, when the thickness doubles, also the flow resistance doubles. Also, the porosity levels may vary in the layer itself. For example, here, the layer consists of two sublayers having different properties such as porosity. This is shown with two dashed lines especially in Fig. 1b. There may be more than two sublayers.

While the layer has superb properties, advantageously there is a support structure 20 in the mold 10 or 11 for supporting the layer 17. In this way, the layer can be thin, while the drainage is efficient. Also, the support structure will keep the layer in shape even many cycles of production and heavy pressure during pressing.

Actually, as shown in Fig. 1a, the support structure 20 includes a solid base part 21 having one or more exits 13 for fluid. In addition, the support structure 20 includes a three-dimensional lattice 22 under the layer 17, i.e. between the base part and the layer. Thus, fluid like air and water will first flow through the layer and then via the lattice to the exits. As shown in Fig. 1a, there is first a solid support structure 20 and then the lattice 22 supporting the layer 17. By the lattice, fluid will flow also in lateral direction and in any direction in the lattice. Thereby the drainage will be efficient and well pointed. Advantageously, the suction will be connected to the exits to aid the removal of air and water. The lattice can vary inside the mold. In other words, it is possible to generate structures according to load needs in the mold.

In Fig. 1b, the porous surface layer 17 is on top of support structure 20, here the lattice 22 which is on top of solid base part 21. Alternatively, the layer may be on a at least partial large lattice open away from product surface having exits and/or channels as part of the base part. The flow will go through the layer forming the porous product surface and the supporting lattice which then allows flowing in lateral directions to the exits. The lattice is closed at its sides and bottom to direct the flow to the exits. The passages inside the lattice are more open in the flow direction through the mold. Also, the support structures of the lattice are arranged preferably in the loading direction or in an angle to it. So, the lattice has a perforated wall or mesh structures with arcs and pillars. The lattices are three-dimensional structures like meshes in loading direction where parallel meshes are arranged in at least two direction.

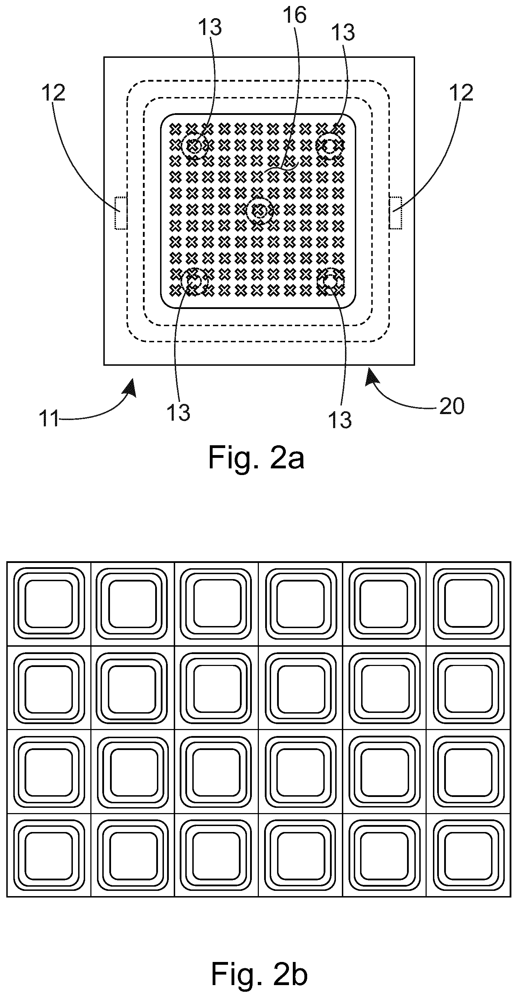

Fig. 2a shows one lower mold 11 seen from above. Here, the product is a square plate with round corners. The lower mold 11 has here five channels 12 and the porous layer 17 with smooth mesh or metal surface with minimal graininess showing small darker spots is shown with cross symbols. In reality, the outer surface of the mold looks like a mesh without clear holes.

Fig. 2b shows a set of molds where the molds are set side by side and attached to a frame (not shown). In this way, twenty-four products are manufactured simultaneously. The quantity of the molds varies according to the product size. After the forming and pressing the products are cut out and the matrix material is returned to foaming process. The cut products are ready for packaging without drying. It is possible the spray coating agent before cutting to tune the properties of at least on side of the product.

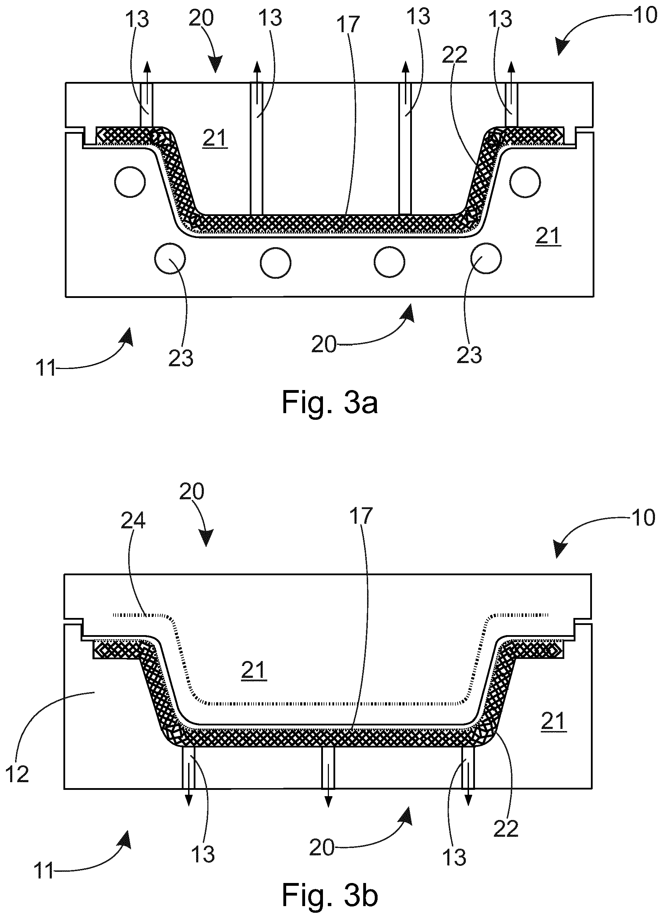

Figures 3a and 3b show two pairs of molds for hot pressing. Advantageously, the formed product is hot pressed twice, but more generally, the formed product is hot pressed from one to three times. In Fig. 3a the lower mold 11 is smooth and there are cooling or heating channels 23 increasing the performance of the tooling depending on the application. In additive manufacturing the channels can be easily applied inside any part of the mold, like the supporting structures or the porous layer itself. Here, the upper mold 10 is porous, and fluid is drained through it via exits 13.

In Fig. 3b the lower mold 11 is porous while the upper mold 10 has an electric heater 24 for heating up the mold. By this two-stage process both sides of the product will be smooth and dense.

After 3D-printing there may be some roughness on the layer impairing the surface of the final product. Rough surface may also collect impurities. To avoid this, the product surface of the layer is vibration finished. In this way, the layer is polished without smearing. The vibration finishing or polishing process is gentle, and smearing can be avoided. Thus, a smooth surface is reached without sacrificing flowability thorough the porous layer. The tests have been run without any grinding compound additives that potentially could clog the porous structures. Good polishing results can still be reached.

Due high pressure and temperature during production, the layer is 3D-printed from metal. Also, the lattice can be 3D-printed. Advantageously, the layer and/or the lattice is of stainless tool steel. Titanium is also possible as well In718 or In625. These austenitic nickel-chromium-based superalloys resist heat and pressure.

To use foamed fiber, the process requires specific molds that are denser than before, but still open enough to let fluid drain out. Additive manufacturing can in addition to build fine perforations, also achieve porous metal structures. Porous metal structures can be used instead of a defined perforation and mimic a very fine undefined mesh, dictated by process parameters of the 3D printer. In this way the overall porosity of the metal structures can be controlled even though their microstructures are undefined. The porous layer is supported by a support structure that can be fused to the porous layer during the build process, typically a suitable lattice structure. The porous layer has similar cad data as the solid base. This is an advantage of porous metal structures compared to defined perforated structures, the data preparation is much less cumbersome.

The mold is done by any or combination of mentioned methods, that utilize powder bed based additive manufacturing of metal. Advantageously, powder would be 20 - 70 microns, more specifically 40 - 50 microns. Advantageously, the porous layer is on top of a supporting geometry, like the lattice as mentioned above. The porous layer is a separate part to the supporting geometry but might be fused together in the manufacturing process. Porous layer enables fluid to drain out, while leaving fibers on the top of the layer. Additive manufacturing enables optimized mold geometries tailored to the application and high flexibility in the production. Also foam forming is possible. In other words, the molds according to the invention is used in manufacturing of a molded fiber product of foamed fiber. Thus, there is less water to drain compared to slurry. This shortens the time for forming and pressing. Simultaneously, less energy is spent.

## Claims

1. Mold for manufacturing of a molded fiber product, which mold (10, 11) includes a porous product surface (16) made by additive manufacturing, wherein at least a part of the product surface (16) is in form of a layer (17) without defined holes forming undefined mesh, **characterized in that** the layer (17) is semi randomly 3D-printed from metal.

2. Mold according to claim 1, **characterized in that** the layer (17) consists of several parts (18, 19) having different properties.

3. Mold according to claim 1 or 2, **characterized in that** the, **characterized in that** the layer (17) has 0,5 - 5 mm of thickness.

4. Mold according to any of claims 1 - 3, **characterized in that** the thickness of the layer (17) is uneven in different parts of the mold (10, 11).

5. Mold according to any of claims 1 - 4, **characterized in that** the layer (17) has porosity of 20 - 40%.

6. Mold according to claim 5, **characterized in that** there are different porosity levels in different parts of the mold (10, 11).

7. Mold according to any of claims 1 - 6, **characterized in that** the product surface of the layer (17) is vibration finished.

8. Mold according to any of claims 1 - 7, **characterized in that** the layer (17) is of stainless tool steel.

9. Mold according to any of claims 1 - 8, **characterized in that** there is a support structure (20) in the mold (10, 11) for supporting the layer (17).

10. Mold according to claim 9, **characterized in that** the support structure (20) includes a solid base part (21) having one or more exits (13).

11. Mold according to claim 9 or 10, **characterized in that** the support structure (20) includes a three-dimensional lattice (22) under the layer (17).

12. Mold according to claim 11, **characterized in that** the lattice (22) is fused to the layer (17).

13. Mold according to any of claims 9 - 12, **characterized in that** the support structure (20) has a uniform geometry for several layers (17) with different product geometry.

14. Mold according to any of claims 1 - 13, **characterized in that** the layer (17) has sublayers having different properties.

## Patentansprüche

1. Form zur Herstellung eines Faserformprodukts, wobei die Form (10, 11) eine poröse Produktoberfläche (16) einschließt, die durch additive Fertigung hergestellt ist, wobei mindestens ein Teil der Produktoberfläche (16) in Form einer Schicht (17) ohne definierte Löcher vorliegt, die ein undefiniertes Netz bildet, **dadurch gekennzeichnet, dass** die Schicht (17) halb zufällig aus Metall 3D-gedruckt ist.

2. Form nach Anspruch 1, **dadurch gekennzeichnet, dass** die Schicht (17) aus mehreren Teilen (18, 19) besteht, die unterschiedliche Eigenschaften aufweisen.

3. Form nach Anspruch 1 oder 2, **dadurch gekennzeichnet, dass** die Schicht (17) eine Dicke von 0,5 bis 5 mm aufweist.

4. Form nach einem der Ansprüche 1 bis 3, **dadurch gekennzeichnet, dass** die Dicke der Schicht (17) in verschiedenen Teilen der Form (10, 11) ungleichmäßig ist.

5. Form nach einem der Ansprüche 1 bis 4, **dadurch gekennzeichnet, dass** die Schicht (17) eine Porosität von 20 bis 40 % aufweist.

6. Form nach Anspruch 5, **dadurch gekennzeichnet, dass** in verschiedenen Teilen der Form (10, 11) unterschiedliche Porositätsgrade vorhanden sind.

7. Form nach einem der Ansprüche 1 bis 6, **dadurch gekennzeichnet, dass** die Produktoberfläche der Schicht (17) vibrationsbearbeitet ist.

8. Form nach einem der Ansprüche 1 bis 7, **dadurch gekennzeichnet, dass** die Schicht (17) aus rostfreiem Werkzeugstahl besteht.

9. Form nach einem der Ansprüche 1 bis 8, **dadurch gekennzeichnet, dass** in der Form (10, 11) eine Stützstruktur (20) zum Abstützen der Schicht (17) vorhanden ist.

10. Form nach Anspruch 9, **dadurch gekennzeichnet, dass** die Stützstruktur (20) einen festen Basisteil (21) einschließt, der einen oder mehrere Ausgänge (13) aufweist.

11. Form nach Anspruch 9 oder 10, **dadurch gekennzeichnet, dass** die Stützstruktur (20) ein dreidimensionales Gitter (22) unter der Schicht (17) einschließt.

12. Form nach Anspruch 11, **dadurch gekennzeichnet, dass** das Gitter (22) mit der Schicht (17) verschmolzen ist.

13. Form nach einem der Ansprüche 9 bis 12, **dadurch gekennzeichnet, dass** die Stützstruktur (20) eine einheitliche Geometrie für mehrere Schichten (17) mit unterschiedlicher Produktgeometrie aufweist.

14. Form nach einem der Ansprüche 1 bis 13, **dadurch gekennzeichnet, dass** die Schicht (17) Teilschichten mit unterschiedlichen Eigenschaften aufweist.

## Revendications

1. Moule pour la fabrication d'un produit fibreux moulé, ledit moule (10, 11) comprenant une surface produit poreuse (16) fabriquée par fabrication additive, dans laquelle au moins une partie de la surface produit (16) se présente sous la forme d'une couche (17) sans trous définis formant un maillage indéfini, **caractérisé en ce que** la couche (17) est imprimée en 3D de manière semi-aléatoire à partir de métal.

2. Moule conformément à la revendication 1, **caractérisé en ce que** la couche (17) se compose de plusieurs parties (18, 19) ayant des propriétés différentes.

3. Moule conformément à la revendication 1 ou 2, **caractérisé en ce que** la couche (17) a une épaisseur de 0,5 à 5 mm.

4. Moule conformément à l'une quelconque des revendications 1 à 3, **caractérisé en ce que** l'épaisseur de la couche (17) est inégale dans les différentes parties du moule (10, 11).

5. Moule conformément à l'une quelconque des revendications 1 à 4, **caractérisé en ce que** la couche (17) présente une porosité de 20 à 40 %.

6. Moule conformément à la revendication 5, **caractérisé en ce que** les niveaux de porosité sont différents dans les différentes parties du moule (10, 11).

7. Moule conformément à l'une quelconque des revendications 1 à 6, **caractérisé en ce que** la surface produit de la couche (17) est finie par vibro-abrasion.

8. Moule conformément à l'une quelconque des revendications 1 à 7, **caractérisé en ce que** la couche (17) est en acier à outils inoxydable.

9. Moule conformément à l'une quelconque des revendications 1 à 8, **caractérisé en ce qu'**une structure de soutien (20) se trouve dans le moule (10, 11) pour soutenir la couche (17).

10. Moule conformément à la revendication 9, **caractérisé en ce que** la structure de soutien (20) comprend une partie de base solide (21) ayant une ou plusieurs sorties (13).

11. Moule conformément à la revendication 9 ou 10, **caractérisé en ce que** la structure de soutien (20) comprend un treillis tridimensionnel (22) sous la couche (17).

12. Moule conformément à la revendication 11, **caractérisé en ce que** le treillis (22) est fusionné à la couche (17).

13. Moule conformément à l'une quelconque des revendications 9 à 12, **caractérisé en ce que** la structure de soutien (20) présente une géométrie uniforme pour plusieurs couches (17) avec géométrie de produit différente.

14. Moule conformément à l'une quelconque des revendications 1 à 13, **caractérisé en ce que** la couche (17) comporte des sous-couches ayant des propriétés différentes.
